# EUROPÄISCHE PATENTSCHRIFT

(11) **EP 1 048 868 B1**
(45) Veröffentlichungstag und Bekanntmachung des Hinweises auf die Patenterteilung: **17.05.2006**
(21) Anmeldenummer: 00108711.3
(22) Anmeldetag: 22.04.2000
(51) Int. Cl.: F16D 25/0638, F16D 25/12

(54) **Hydraulisch betätigbare Kupplung**
Hydraulically actuated clutch
Embrayage à commande hydraulique

(30) Priorität: 30.04.1999 DE 19919779
(43) Veröffentlichungstag der Anmeldung: 02.11.2000
(73) Patentinhaber: ZF FRIEDRICHSHAFEN Aktiengesellschaft, 88038 Friedrichshafen (DE)
(72) Erfinder: Herlitzek, Michael, 88097 Eriskirch (DE); Leber, Fritz, 88048 Friedrichshafen (DE)

(56) Entgegenhaltungen:
- DE-A- 19 830 951
- DE-A- 19 850 132
- US-A- 3 243 026
- US-A- 4 732 253
- US-A- 5 542 517

## Beschreibung

Die Erfindung bezieht sich auf eine hydraulisch betätigbare Kupplung, welche durch Druckbeaufschlagen im Schließsinne und durch Drucklosschalten im Öffnungssinne betätigbar ist, nach der im Oberbegriff von Anspruch 1 und im Dokument US-A-3243026 näher definierten Art.

Hydraulisch betätigbare Kupplungen werden häufig eingesetzt, um verschiedene Gangstufen in einem Antrieb zu schalten oder als Wendekupplung die Fahrtrichtung eines Mobilfahrzeugs zu reversieren. Bei hydraulisch betätigbaren Kupplungen befindet sich auch im nicht druckbeaufschlagten Zustand der Betätigungseinrichtung der Kupplung ein Druckmittel, welches bei Rotation der Kupplung drehzahlabhängige Kräfte erzeugt. Diese drehzahlabhängigen Kräfte wirken sich negativ auf das Verhalten der Kupplung aus. Um diese drehzahlabhängigen Kräfte der Betätigungseinrichtung der Kupplung zumindest teilweise zu kompensieren, werden Ausgleichsflächen mit Druckflüssigkeit beaufschlagt, welche dadurch ebenfalls drehzahlabhängige Kräfte erzeugen, welche jedoch so mit der Betätigungseinrichtung verbunden sind, daß sich die drehzahlabhängigen Kräfte der Betätigungseinrichtung und die drehzahlabhängigen Kräfte, welche auf die Ausgleichsflächen wirken, zumindest teilweise gegenseitig aufheben.

Die DE 34 32 403 C2 offenbart eine Lamellenkupplung, bei welcher die drehzahlabhängigen Kräfte der Betätigungseinrichtung über drehzahlabhängige Kräfte, welche auf einen Ausgleichskolben wirken, kompensiert werden. Hierzu wird ein zusätzlicher Zylinderraum mit einem zusätzlichen Kolben benötigt, welcher über Druckstücke den drehzahlabhängigen Kräften der Betätigungseinrichtung entgegenwirkt. Da der Ausgleichskolbenraum einen Überlauf aufweist, über welchen bei gefülltem Ausgleichskolbenraum die zugeführte Druckflüssigkeit entweichen kann, muß permanent Druckflüssigkeit zum Ausgleichskolben gefördert werden, um zu gewährleisten, daß die Zuführung zum Ausgleichskolben permanent mit Druckflüssigkeit gefüllt ist und die durch den Überlauf abfließende Druckflüssigkeit ersetzt wird.

Der vorliegenden Erfindung liegt die Aufgabe zugrunde, eine hydraulisch betätigte Kupplung zu schaffen, bei welcher die drehzahlabhängigen Kräfte nahezu kompensiert werden, dabei die Kupplung in ihrer Baulänge kompakt ausgeführt werden kann und geringe hydraulische Verluste entstehen.

Die Aufgabe wird mit einer, auch die kennzeichnenden Merkmale des Hauptanspruchs aufweisenden, gattungsgemäßen, hydraulisch betätigbaren Kupplung gelöst.

Erfindungsgemäß besteht die Kupplung aus einer mit Druck beaufschlagbaren Betätigungseinrichtung, wobei im druckbeaufschlagten Zustand der Betätigungseinrichtung die Kupplung geschlossen wird und im drucklosen Zustand der Betätigungseinrichtung die Kupplung mit Hilfe einer Federkraft wieder geöffnet wird. Die Betätigungseinrichtung weist einen Kolben auf, welcher einerseits druckbeaufschlagbar ist, um die Kupplung im Schließsinne zu betätigen und andererseits die Begrenzung eines Raumes darstellt, in welchem sich Druckflüssigkeit befindet, welche den drehzahlabhängigen Kräften des druckbeaufschlagbaren Kolbenraumes entgegenwirkt. Indem der Kolben einerseits eine Berandung für den druckbeaufschlagbaren Raum der Betätigungseinrichtung und andererseits eine Berandung für die Druckflüssigkeit für die drehzahlabhängigen Kräfte darstellt, kann mit wenigen Bauteilen eine axial kompakte Kupplung geschaffen werden. Der Raum, welcher mit Druckflüssigkeit gefüllt ist, welche den drehzahlabhängigen Kräften der druckbeaufschlagten Betätigungseinrichtung entgegenwirkt, besitzt nur Öffnungen, durch welche Druckflüssigkeit während der Betätigung der Kupplung im Schließ- oder Öffnungssinne zu- oder abführbar ist. Indem der Kolbenraum sonst geschlossen ausgeführt ist, wird ein permanentes Abfließen von Druckflüssigkeit verhindert, wodurch ein ständiger Druckmittelfluß in der Zuführung verhindert wird und somit die Versorgungspumpe zur Zuführung in ihrer Auslegung geringer ausgeführt werden kann und somit die Verluste verringert werden können. Es kann jedoch auch vorgesehen sein, die Betätigungseinrichtung der Kupplung als Zylinder-Kolben-Einheit auszubilden und eine weitere Zylinder-Kolben-Einheit vorzusehen, welche die drehzahlabhängigen Kräfte erzeugt und über Verbindungselemente mit der Betätigungseinrichtung verbunden ist, und so den drehzahlabhängigen Kräften der Betätigungseinrichtung entgegenwirkt, wobei diese Zylinder-Kolben-Einheit bis auf die Druckmittelzuführung geschlossen ausgebildet ist. Vorzugsweise ist die Zuführung zu diesem Raum mit einer Leitung verbunden, in welcher sich Druckflüssigkeit zur Kühlung und Schmierung, vorzugsweise der Lamellen der Kupplung, befindet. Wird nun die Betätigungseinrichtung mit Druck beaufschlagt und die Kupplung im Schließsinne betätigt, verringert sich der Raum, in welchem sich Druckflüssigkeit zum Ausgleich der drehzahlabhängigen Kräfte befindet, und die Druckflüssigkeit in diesem Raum wird über die Zuführung in eine Leitung zurückgefördert, in welcher sich das Kühl- und Schmieröl der Lamellen befindet, wodurch im Schließvorgang der Kupplung den Lamellen zusätzlich Schmier- und Kühlflüssigkeit zugeführt wird. Wird die Kupplung als Reversierkupplung eingesetzt, so wird die Kupplung vorzugsweise als Doppelkupplung ausgeführt, wobei beide Betätigungseinrichtungen der Kupplungen mit Ausgleichsräumen versehen sind, welche über eine gemeinsame Zuführung in Verbindung stehen. Ist nun eine erste Kupplung im Schließsinne betätigt, indem eine erste Betätigungseinrichtung mit Druck beaufschlagt ist, und eine zweite Kupplung im Öffnungssinne betätigt, indem eine zweite Betätigungseinrichtung drucklos ist, so befindet sich in dem Ausgleichsraum der ersten Kupplung ein geringeres Druckmittelvolumen als in dem Ausgleichsraum der zweiten Kupplung. Während eines Reversiervorgangs wird nun die erste Betätigungseinrichtung drucklos geschaltet und die zweite Betätigungseinrichtung mit Druck beaufschlagt und das Druckmittelvolumen des zweiten Ausgleichsraumes kann über die gemeinsame Verbindung in den ersten Ausgleichsraum verschoben werden, so daß sich in der gemeinsamen Druckmittelzuführung eine sehr geringe Änderung der Strömungsgeschwindigkeit ergibt. Dies wirkt sich vor allem vorteilhaft aus, wenn die gemeinsame Druckmittelzuführung noch zusätzlich die Aufgabe hat, die Lamellen der Kupplung und eventuell vorhandene Lagerungen zu schmieren und zu kühlen oder mit einer hydraulischen Steuerung in Verbindung steht. Durch das gegenseitige Befüllen der Ausgleichsräume wird somit eine ungewünschte Pulsation in der gemeinsamen Zuführung verhindert. Indem der Raum, in welchem sich Druckflüssigkeit befindet, um die drehzahlabhängigen Kräfte der Betätigungseinrichtung zu kompensieren, bis auf eine Zuführung geschlossen ist, ist es möglich, indem in dieser Zuführung ein definierter Druck eingestellt wird, während des Öffnungsvorganges der Kupplung die Bewegung des Kolbens in der Betätigungseinrichtung zu beschleunigen, da dieser Druck die Federkraft, welche den Kolben zurückdrückt, unterstützt. Durch das definierte Aufbringen eines Gegendrucks in dem Raum, in welchem sich Druckflüssigkeit befindet, um den drehzahlabhängigen Kräften der Betätigungseinrichtung entgegenzuwirken, ist es auch möglich, durch Variieren dieses Druckes die Kupplung geregelt zu öffnen oder zu schließen, ohne hierzu aufwendige Bauformen von Tellerfedern verwenden zu müssen, welche ihre Charakteristik nicht verändern können, wodurch eine geregelte Rückstellkraft nicht möglich ist.

Weitere Merkmale der Erfindung sind dem Ausführungsbeispiel zu entnehmen.

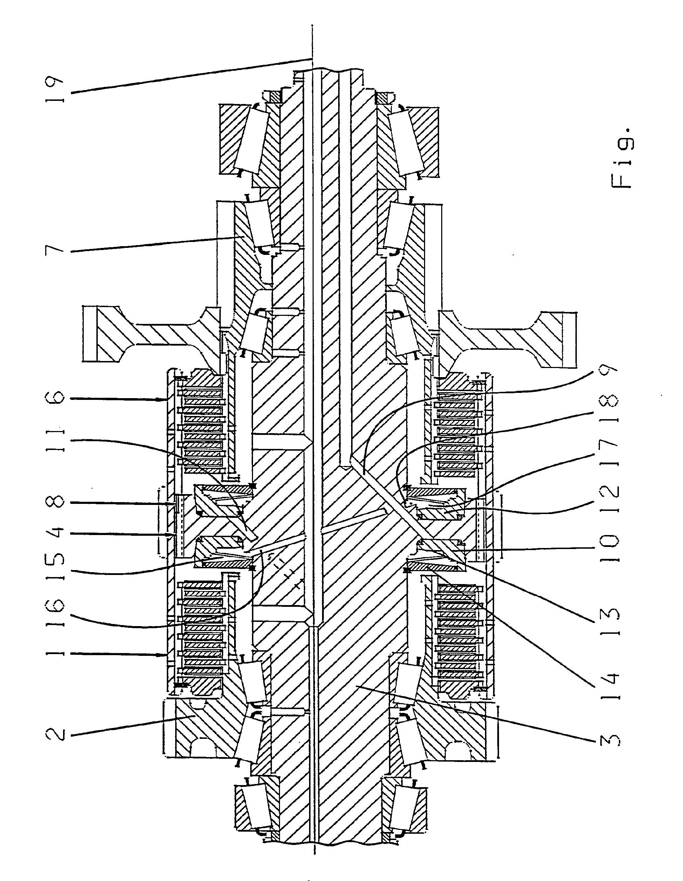

Die einzige Figur zeigt eine hydraulisch betätigbare Kupplung, welche als Doppelkupplung aufgebaut ist.

Über eine erste Kupplung 1 ist ein Lamellenträger 2 durch Druckbeaufschlagen einer ersten Betätigungseinrichtung 4 mit einer Welle 3 kraftschlüssig verbindbar. Über eine zweite Kupplung 6 ist ein Lamellenträger 7 durch Druckbeaufschlagung einer zweiten Betätigungseinrichtung 8 mit einer Welle 3 kraftschlüssig verbindbar. Über eine Leitung 9 kann ein Kolben 10 der ersten Betätigungseinrichtung 4 mit Druck beaufschlagt werden, um eine erste Kupplung 1 im Schließsinne zu betätigen. Über eine Leitung 11 ist ein Kolben 12 der zweiten Betätigungseinrichtung 8 mit Druck beaufschlagbar, um die Kupplung 6 im Schließsinne zu betätigen. Da die Druckmittelzuführung zu den Betätigungseinrichtungen 4 und 8 über die Leitungen 9 und 11 erfolgt, ist auch im drucklosen Zustand Druckmittel auf einer Seite der Kolben 10 und 12 vorhanden und dieses Druckmittel erzeugt bei Rotation der Welle 3 eine drehzahlabhängige Kraft auf die Kolben 10 und 12. Dadurch ist gewährleistet, daß die Zuführungen immer mit Druckmittel befüllt sind. Um die drehzahlabhängige Kraft, welche auf den Kolben 10 wirkt, zu kompensieren, befindet sich auf einer entgegengesetzten Fläche 13 des Kolbens 10 ebenfalls Druckmittel, welches bei Rotation der Welle 3 ebenfalls eine drehzahlabhängige Kraft erzeugt, welche auf den Kolben 10 wirkt, wodurch der Kolben 10 nahezu frei von drehzahlabhängigen Kräften ist. Der Kolben 10 mit seiner Fläche 13 bildet mit der Welle 3 und einer Scheibe 14 einen Raum 15, welcher bis auf eine Öffnung 16 geschlossen ausgebildet ist. Der Raum 17 der zweiten Betätigungseinrichtung 8 ist vergleichbar aufgebaut. Die Öffnung 18 im Raum 17 ist über eine Zuführung 19 mit der Öffnung 16 im Raum 15 verbunden. Über die Zuführung 19 wird einerseits Kühl- und Schmiermittel zu den Lagerungen und den Lamellen der Kupplungen 1 und 6 gefördert und andererseits die Räume 15 und 17 mit Druckmittel befüllt. Der Druck in der Zuführung 19 bestimmt den Druck in den Räumen 15 und 17. Befindet sich nun die erste Betätigungseinrichtung 4 und die zweite Betätigungseinrichtung 8 im drucklosen Zustand, sind die Räume 15 und 17 mit ihrem maximalen Volumen mit Druckmittel befüllt. Wird die Betätigungseinrichtung 4 mit Druck beaufschlagt, so bewegt sich der Kolben 10 entgegen der Federkraft in axialer Richtung und der Raum 15 verringert sein Volumen. Durch die Verringerung des Volumens des Raumes 15 wird Druckmittel über die Öffnung 16 in die Zuführung 19 gefördert und somit fließt vermehrt Kühl- und Schmiermittel zu den Lamellen der Kupplungen 1 und 6. Somit wird immer dann vermehrt Kühl- und Schmiermittel zur Verfügung gestellt, wenn eine Kupplung im Schließsinne betätigt wird und zuvor beide Kupplungen 1 und 6 drucklos waren, wie z. B. bei einem Anfahrvorgang. Sind die Betätigungseinrichtungen 4 und 8 drucklos und die Betätigungseinrichtung 8 wird mit Druck beaufschlagt, so wird ebenso zusätzlich Schmiermittel zu den Kupplungen gefördert, während die Kupplung 6 im Schließsinne betätigt wird, indem der Raum 17 sein Volumen verringert. Hierbei entsteht in der Zuführung 19 infolge der Zuführung von Druckmitteln aus dem Raum 15 oder 17 ein Druckanstieg, welcher sich bei Erreichen der Endlage des Kolbens 10 oder 12 wieder abbaut. Ist die erste Betätigungseinrichtung 4 druckbeaufschlagt und die zweite Betätigungseinrichtung 8 drucklos geschaltet und wird anschließend eine Schaltung durchgeführt, bei der die zweite Betätigungseinrichtung 8 mit Druck beaufschlagt und die erste Betätigungseinrichtung 4 drucklos geschaltet wird, so vergrößert sich während dieser Schaltung der Raum 15 und der Raum 17 verkleinert sich, so daß das Druckmittel des Raumes 17 über die Öffnung 18 zur Öffnung 16 in den Raum 15 gefördert wird, ohne daß eine größere Druckpulsation in der Zuführung 19 auftritt. Dies hat den Vorteil, daß bei einer dynamischen Schaltung nur geringe Druckpulsationen in der Zuführung 19 auftreten, welche sich positiv auf eine elektrohydraulische Schaltung auswirken können. Indem die Kolben 10 und 12 jeweils die Berandung zu den druckbeaufschlagbaren Räumen und den Räumen, in denen sich Druckflüssigkeit befindet, welche den drehzahlabhängigen Kräften entgegenwirkt, bilden und indem die Kolben 10 und 12 sich gegenüberliegend in der Welle 3 angeordnet sind und die Welle 3 mittig mit den Kupplungen 1 und 6 über einen gemeinsamen äußeren Lamellenträger 5 in Verbindung steht, ist es möglich, eine sehr kompakte Wendekupplung zu schaffen, welche sich durch die Verwendung von wenig Teilen auszeichnet.

### Bezugszeichen

- 1: erste Kupplung
- 2: Lamellenträger
- 3: Welle
- 4: erste Betätigungseinrichtung
- 5: Lamellenträger
- 6: zweite Kupplung
- 7: Lamellenträger
- 8: zweite Betätigungseinrichtung
- 9: Leitung
- 10: Kolben
- 11: Leitung
- 12: Kolben
- 13: Fläche
- 14: Scheibe
- 15: Raum
- 16: Öffnung
- 17: Raum
- 18: Öffnung
- 19: Zuführung

## Patentansprüche

1. Hydraulisch betätigbare Kupplungwobei die Kupplung aus zwei Einzelkupplungen besteht und als Doppelkupplung ausgeführt ist, wobei die Einzelkupplung durch Druckbeaufschlagen im Schließsinne betätigbar ist und durch Drucklosschalten im Öffnungssinne betätigbar ist, bei welcher einerseits drehzahlabhängige Kräfte durch Druckflüssigkeit an der mit hydraulischem Druck beaufschlagbaren Seite eines Kolbens (10, 12) einer Betätigungseinrichtung (4, 8) der Einzelkupplung (1, 6) erzeugt werden und andererseits drehzahlabhängige Kräfte durch Druckflüssigkeit auf einer Seite eines Kolbens (10, 12) der Einzelkupplung (1, 6) erzeugt werden, welche den drehzahlabhängigen Kräften an der mit hydraulischem Druck beaufschlagbaren Seite eines Kolbens (10, 12) einer Betätigungseinrichtung (4, 8) der Einzelkupplung (1, 6) entgegenwirken, wobei ein Kolben (10, 12) einer Betätigungseinrichtung (4, 8) der Einzelkupplung (1, 6) einerseits mit Druck beaufschlagbar ist, um die Einzelkupplung im Schließsinne zu betätigen und andererseits mit einer äußeren Berandung eines Raumes (15, 17) in Verbindung steht, in welcher sich Druckflüssigkeit befindet, welche den drehzahlabhängigen Kräften an der mit hydraulischem Druck beaufschlagbaren Seite des Kolbens (10, 12) einer Betätigungseinrichtung (4, 8) der Einzelkupplung (1, 6) entgegenwirkt, wobei dieser Raum (15, 17) bis auf Öffnungen (16, 18), durch welche Druckflüssigkeit während der Betätigung der Einzelkupplung (1, 6) im Schließ- oder Öffnungssinne zu- oder abführbar ist, geschlossen ist wobei der Raum (15, 17), mit einer Druckmittelzuführung (19) verbunden ist, in welcher sich Schmier- und Kühlflüssigkeit befindet **dadurch gekennzeichnet, daß** durch Druckbeaufschlagen einer zuvor drucklosen Betätigungseinrichtung (4, 8) einer ersten Einzelkupplung (1, 6) der Doppelkupplung und gleichzeitig im Drucklosschalten einer zuvor druckbeaufschlagten Betätigungseinrichtung (4, 8) einer zweiten Einzelkupplung der Doppelkupplung ein Druckmittel von einem Raum (15, 17) der ersten Kupplung (1, 6), in welchem sich Druckflüssigkeit zum Ausgleich der drehzahlabhängigen Kräfte befindet, in einen Raum (15, 17) der zweiten Kupplung (1, 6), in welchem sich Druckflüssigkeit zum Ausgleich der drehzahlabhängigen Kräfte befindet, verschoben wird und der Raum der ersten Einzelkupplung und der Raum der zweiten Einzelkupplung über eine gemeinsame Zuführung in Verbindung stehen.

2. Hydraulisch betätigte Kupplung nach Anspruch 1, **dadurch gekennzeichnet, daß** ein Kolben (10, 12) einer Betätigungseinrichtung (4, 8) einerseits eine Berandung für einen Zylinderraum einer Betätigungseinrichtung (4, 8) darstellt und andererseits eine Berandung für einen Raum (15, 17) darstellt, in welchem sich Druckflüssigkeit befindet, welche den drehzahlabhängigen Kräften der Betätigungseinrichtung (4, 8) entgegenwirkt.

3. Hydraulisch betätigbare Kupplung nach Anspruch 2, **dadurch gekennzeichnet, daß** die Zuführung (19), in welcher sich Schmier- und Kühlflüssigkeit befindet, so mit den Lamellen der Kupplung (1, 6) in Verbindung steht, daß durch Betätigen der Kupplung (1, 6) im Schließsinne den Lamellen der Kupplung (1, 6) zusätzlich Druckmittel zugeführt wird.

## Claims

1. Hydraulically actuated clutch, which clutch comprises two individual clutches and is of a dual clutch design, and the individual clutch can be operated in the closing direction by applying pressure and can be operated in the opening direction by switching to no-pressure mode, and speed-dependent forces can be generated at the side of a piston (10, 12) of an actuating mechanism (4, 8) of the individual clutch (1, 6) that can be hydraulically pressurised by means of compressed fluid, on the one hand, and, on the other hand, speed-dependent forces can be generated by compressed fluid on a side of a piston (10, 12) of the individual clutch (1, 6) which counteract the speed-dependent forces on the side of a piston (10, 12) of an actuating mechanism (4, 8) of the individual clutch (1, 6) to which hydraulic pressure can be applied, and a piston (10, 12) of an actuating mechanism (4, 8) of the individual clutch (1, 6) can be pressurised in order to actuate the individual clutch in the closing direction, on the one hand, and, on the other hand, communicates with an external boundary wall of a chamber (15, 17) containing compressed fluid which counteracts the speed-dependent forces on the side of the piston (10, 12) of an actuator mechanism (4, 8) of the individual clutch (1, 6) to which hydraulic pressure can be applied, which chamber (15, 17) is closed with the exception of orifices (16, 18) through which compressed fluid can be introduced or discharged when the individual clutch (1, 6) is being actuated in the closing or opening direction, and the chamber (15, 17) is connected to a pressurising medium supply system (19) in which lubricating and cooling fluid is disposed, **characterised in that**, by pressurising an actuator mechanism (4, 8) of a first individual clutch (1, 6) of the dual clutch that was previously without pressure and simultaneously switching an actuator mechanism (4, 8) of a second individual clutch of the dual clutch that was previously pressurised into the no-pressure mode, a pressurising medium can be displaced from a chamber (15, 17) of the first clutch (1, 6), in which compressed fluid is disposed for compensating the speed-dependent forces, into a chamber (15, 17) of the second clutch (1, 6), in which compressed fluid is disposed for compensating the speed-dependent forces, and the chamber of the first individual clutch and the chamber of the second individual clutch are connected by means of a common supply system.

2. Hydraulically actuated clutch as claimed in claim 1, **characterised in that** a piston (10, 12) of an actuator mechanism (4, 8) on the one hand constitutes a boundary wall for a cylinder chamber of an actuating mechanism (4, 8) and on the other hand constitutes a boundary wall for a chamber (15, 17) containing compressed fluid, which counteracts the speed-dependent forces of the actuator mechanism (4, 8).

3. Hydraulically actuated clutch as claimed in claim 2, **characterised in that** the supply system (19) containing lubricating and coolant fluid is connected to the discs of the clutch (1, 6) so that additional compressed medium is delivered to the discs of the clutch (1, 6) when the clutch (1, 6) is actuated in the closing direction.

## Revendications

1. Embrayage à commande hydraulique, l'embrayage étant constitué de deux embrayages individuels et configuré comme un double embrayage, dans lequel l'embrayage individuel peut être actionné dans le sens de fermeture en appliquant une pression et peut être actionné dans le sens d'ouverture par commande sans pression, pour lequel d'une part des forces dépendant de la vitesse de rotation sont engendrées par du liquide sous pression sur le côté du piston (10, 12) d'un dispositif d'actionnement (4, 8) de l'embrayage individuel (1, 6) sur lequel est appliquée une pression hydraulique et d'autre part des forces dépendant de la vitesse de rotation sont engendrées par du liquide sous pression sur un côté d'un piston (10, 12) de l'embrayage individuel (1, 6), qui s'opposent aux forces dépendant de la vitesse de rotation sur le côté d'un piston (10, 12) d'un dispositif d'actionnement (4, 8) de l'embrayage individuel (1, 6) sur lequel est appliquée une pression hydraulique, dans lequel un piston (10, 12) d'un dispositif d'actionnement (4, 8) de l'embrayage individuel (1, 2) peut être soumis à une pression pour actionner l'embrayage individuel dans le sens de fermeture, et est d'autre part en communication avec une bordure extérieure d'une chambre (15, 17) dans laquelle se trouve le liquide sous pression qui s'oppose aux forces dépendant de la vitesse de rotation sur le côté du piston (10, 12) d'un dispositif d'actionnement (4, 8) de l'embrayage individuel (1, 6) sur lequel est appliquée une pression hydraulique, dans lequel cette chambre (15, 17) est fermée, exception faite d'ouvertures (16, 18) par lesquelles le liquide sous pression peut être amené et évacué pendant l'actionnement de l'embrayage individuel (1, 6) dans le sens de fermeture ou d'ouverture, la chambre (15, 17) étant reliée à une conduite d'amenée de fluide sous pression (19) dans laquelle se trouve du liquide de lubrification et de refroidissement, **caractérisé en ce que** par l'application d'une pression sur un dispositif d'actionnement (4, 8) précédemment hors pression du premier embrayage individuel (1, 6) du double embrayage et par la commande simultanée sans pression d'un dispositif d'actionnement (4, 8) précédemment sous pression d'un deuxième embrayage individuel du double embrayage, un fluide sous pression est déplacée d'une chambre (15, 17) du premier embrayage (1, 6) dans laquelle se trouve du liquide sous pression pour équilibrer les forces dépendant de la vitesse de rotation dans une chambre (15, 17) du deuxième embrayage (1, 6) dans laquelle se trouve du liquide sous pression pour équilibrer les forces dépendant de la vitesse de rotation, et la chambre du premier embrayage individuel et la chambre du deuxième embrayage individuel sont en communication par l'intermédiaire d'une conduite d'amenée commune.

2. Embrayage à commande hydraulique selon la revendication 1, **caractérisé en ce qu'**un piston (10, 12) d'un dispositif d'actionnement (4, 8) représente d'une part une bordure pour une chambre cylindrique d'un dispositif d'actionnement (4, 8) et représente d'autre part une bordure pour une chambre (15, 17) dans laquelle se trouve du liquide sous pression qui s'oppose aux forces du dispositif d'actionnement (4, 8) qui dépendent de la vitesse de rotation.

3. Embrayage à commande hydraulique selon la revendication 2, **caractérisé en ce que** la conduite d'amenée (19) dans laquelle se trouve du liquide de lubrification et de refroidissement est en communication avec les lamelles de l'embrayage (1, 6) de telle sorte qu'en actionnant l'embrayage (1, 6) dans le sens de fermeture, du fluide sous pression est en outre amené jusqu'aux lamelles de l'embrayage (1, 6).
